# EUROPEAN PATENT SPECIFICATION

(11) **EP 1 482 203 B1**
(45) Date of publication and mention of the grant of the patent: **14.04.2010**
(21) Application number: 04253109.5
(22) Date of filing: 27.05.2004
(51) Int. Cl.: F16D 69/02, C08J 5/14

(54) **Friction material**
Reibungsmaterial
Matériau de friction

(30) Priority: 28.05.2003 JP 2003150560
(43) Date of publication of application: 01.12.2004
(73) Proprietor: Nisshinbo Industries, Inc., Chuo-ku, Tokyo (JP)
(72) Inventor: Suzuki, Seiji c/o Nisshinbo Industries, Inc., Oura-gun, Gunma-ken (JP); Hattori, Yasuki c/o Nisshinbo Industries, Inc., Oura-gun, Gunma-ken (JP); Yamamoto, Kazuhide c/o Nisshinbo Industries, Inc., Oura-gun, Gunma-ken (JP); Shishido, Yuji c/o Nisshinbo Industries, Inc., Oura-gun, Gunma-ken (JP); Satoh, Yasuhiko c/o Nisshinbo Industries, Inc., Oura-gun, Gunma-ken (JP); Iwasaki, Kazuyuki c/o Nisshinbo Industries, Inc., Oura-gun, Gunma-ken (JP)
(74) Representative: Stuart, Ian Alexander

(56) References cited:
- WO-A-95/07418
- GB-A- 1 206 339
- US-A- 5 288 792

## Description

The present invention relates to friction materials which can be used in such applications as disc pads, brake linings and clutch facings for automobiles.

It is desired that friction materials used as automotive disc pads, brake linings and other similar applications suppress low-frequency noise generation, minimize rotor and disc pad wear, and also have a high and stable coefficient of friction.

Friction materials are generally made by molding and curing a composition that contains a fibrous base, a binder and a filler. To provide the above properties, metal oxide is included as part of the filler. For example, JP-A 2000-178538 discloses the addition of ferrosoferric oxide in order to provide a composition suitable for the production of friction materials which can prevent or reduce brake vibration (high-speed, high-temperature judder) during high-speed braking, which can prevent or reduce brake squeal, and which cause little disc rotor wear. JP-A 2002-138273 discloses the use of magnesium oxide in a specific proportion with graphite in order to provide friction materials for brakes which have a good friction performance and mechanical strength at high temperatures.

However, the above prior art falls short of what is desired; namely, friction materials which generate even less low-frequency noise, which reduce even further the amount of rotor and disc pad wear, and which have an even better coefficient of friction.

There is also a need for friction materials which have an excellent fade resistance. JP-A 2003-82331 discloses one solution to this end, involving the use of non-asbestos friction materials which contain as the binder a resin having a flow of not more than 27 mm at 125°C, which have a porosity of 8 to 20%, and which include flaky or tabular titanate. Another proposed solution, disclosed in International Application WO 95/07418, is a friction pad for disc brakes that is composed largely of magnesium oxide and additionally contains one or more from among calcium oxide (CaO), alumina (Al₂O₃), manganese oxide (Mn₃O₄), iron oxide (Fe₃O₄) and barium sulfate (BaSO₄). In spite of such developments, a desire exists for a way to achieve even further improvement in the fade resistance.

Preferred embodiments of the present invention may provide friction materials having a good balance of properties; that is, friction materials which can suppress low-frequency noise generation, which can reduce rotor and disc pad wear, and which have a high and stable coefficient of friction.

An embodiment of the invention may provide friction materials in which the fade resistance can be improved without lowering the wear resistance and the coefficient of friction.

The inventors have discovered that, by using at least three types of metal oxides having Mohs hardnesses of 4 to 6.5 in a combined amount of at least 12 vol%, good abrasive wear is achieved that does not allow a low-frequency noise-generating transfer film to form on the mating rotor surface; that the use of at least two metal sulfides selected from among molybdenum disulfide, iron sulfide and zinc sulfide enables a particularly high coefficient of friction to be maintained and good rotor and disc pad wear to be achieved; that the use of stainless steel fibers provides a good coefficient of friction, particularly during high-speed braking; and that the addition of alumina powder provides a high coefficient of friction, enables a transfer film of organic matter to be removed from the mating rotor surface, enables the correction of disc thickness variation (DTV) and can help prevent excessive rotor abrasion.

The inventors have also found that by including manganese tetroxide (trimanganese tetroxide) in an amount of at least 0.3 vol% based on the overall friction material and at least 0.5 vol% based on the inorganic filler, improved fade resistance can be achieved without lowering such characteristics as the wear resistance and the coefficient of friction.

Accordingly, in one aspect, the invention provides a friction material made by molding and curing a composition comprising 3 to 8 vol % of stainless steel fibers having a fiber length of 0.5 to 1.5 mm and a fiber diameter of 25 to 75 µm, a binder and a filler, which friction material includes at least three types of metal oxide having Mohs hardnesses of 4 to 6.5 in a combined amount of at least 12 vol%.

The at least three types of metal oxide having Mohs hardnesses of 4 to 6.5 are typically selected from the group consisting of zinc oxide, magnesium oxide, ferrosoferric oxide (triiron tetroxide), manganese tetroxide (trimanganese tetroxide), tin oxide, and titanium oxide.

Preferred embodiments of the foregoing friction material may include 1 to 15 vol% of an organic substance as the filler; 5 to 10 vol% of at least two metal sulfides selected from among molybdenum disulfide, iron sulfide and zinc sulfide; 3 to 8 vol% of stainless steel fibers; and 0.5 to 2 vol% of alumina powder.

The friction material according to the invention is a friction material having a good balance of properties which can suppress low-frequency noise generation, can reduce rotor and disc pad wear, and provides a coefficient of friction at high speeds which is high and stable.

### DETAILED DESCRIPTION OF THE INVENTION

The friction materials of the invention contain a fibrous base, a binder and a filler.

The fibrous base comprises 3 to 8 vol% of stainless steel fibers, because this enables a high coefficient of friction to be achieved to good advantage. Too much stainless steel fiber may increase the amount of rotor abrasion, whereas too little may result in a poor strength and a poor fade resistance. The fibrous base may also include organic fiber (e.g., aramid fibers) or other inorganic fiber (e.g., glass fibers, rock wool, metal fibers such as iron, copper, brass or bronze fibers) commonly used in friction materials. Any one or combination of two or more of these may be used. However, the fibrous base includes no asbestos.

The fibrous base is included in an amount of preferably 5 to 30 vol%, and more preferably 10 to 20 vol%, based on the overall friction material composition.

The fibrous base should have a fiber length of 0.5 to 1.5 mm and a fiber diameter of 25 to 75 µm.

The binder may be any known binder commonly used in friction materials. Illustrative examples of suitable binders include phenolic resins, melamine resins, epoxy resins; various modified phenolic resins such as epoxy-modified phenolic resins, oil-modified phenolic resins, alkylbenzene-modified phenolic resins and cashew-modified phenolic resins; and acrylonitrile-butadiene rubber (NBR). Any one or combinations of two or more of these may be used.

This binder is included in an amount of preferably 10 to 25 vol%, and more preferably 12 to 20 vol%, based on the overall friction material composition.

Illustrative examples of the filler include organic fillers such as various types of rubber powder (e.g., rubber dust, ground tire rubber), cashew dust and melamine dust; and inorganic fillers such as calcium carbonate, barium sulfate, graphite, calcium hydroxide, iron oxide, mica, zirconium oxide, metal powders, silicon oxide, alumina and vermiculite. Any one or combinations of two or more of these may be used.

These fillers are included in an amount of preferably 40 to 85 vol%, and more preferably 50 to 80 vol%, based on the overall friction material composition. The amount of organic substances included as the filler, such as the above-mentioned rubber powder and other organic fillers, is preferably 1 to 15 vol%, and more preferably 5 to 13 vol%. Too small an amount of organic substances may worsen brake squeal and disc pad wear, whereas too much may lower the heat resistance of the friction material.

The friction material of the invention includes at least three types of metal oxide having Mohs hardnesses of 4 to 6.5. These metal oxides are not subject to any particular limitation, provided each has a Mohs hardness of 4 to 6.5 and is a stable substance having a melting point of at least 1,500°C. Preferred examples include zinc oxide, magnesium oxide, ferrosoferric oxide (triiron tetroxide), manganese tetroxide (trimanganese tetroxide), tin oxide and titanium oxide, of which three or more are used. The objects of the first friction material of the invention cannot be achieved with the use of one or two of these metal oxides.

The combined amount of the above three or more types of metal oxide having Mohs hardnesses of 4 to 6.5 is at least 12 vol%, and preferably at least 14 vol%. A combined amount of at least this much makes it possible to prevent the formation of a low-frequency noise-generating transfer film on the rotor surface, and also enables good abrasive wear to be achieved. Too low a combined amount of the above three or more metal oxides will result in poor wear. Although a large combined amount of these metal oxides does not pose any particular problem, the combined amount is generally not more than about 30 vol%.

Although the combined amount of the above three or more metal oxides must be at least 12 vol%, to more advantageously achieve the objects of the invention, it is recommended that each of these three or more metal oxides be included in an amount of preferably at least 3 vol%, and more preferably at least 4 vol%.

In the three or more metal oxides having Mohs hardnesses of 4 to 6.5, at least one metal oxide should preferably have an average particle size of at least 70 to 120 µm, thereby effectively preventing low-frequency noise generation.

By including, in addition to the above metal oxides, at least two metal sulfides from among molybdenum disulfide, iron sulfide and zinc sulfide in a combined amount of 5 to 10 vol%, a high coefficient of friction can be maintained and improved rotor and disc pad wear can be achieved. Too little of these metal sulfides may result in inferior wear, whereas too much may lower the coefficient of friction.

In addition, it is preferable for the friction material to include 0.5 to 2 vol% of alumina powder. The presence of this alumina powder enables a high coefficient of friction to be achieved, enables a transfer film of organic matter to be removed from the rotor surface, provides the ability to correct disc thickness variation (DTV), and can prevent excessive rotor abrasion. Too much alumina powder may increase the amount of wear, whereas too little may fail to provide the friction material with a sufficient coefficient of friction and may be inadequate for transfer film removal and for correcting DTV.

The friction material of the invention preferably includes manganese tetroxide (trimanganese tetroxide) as a filler. By including manganese tetroxide, the fade resistance can be improved without lowering the coefficient of friction. Manganese tetroxide is known to readily adsorb oxygen under heating and undergo transformation to a maximum of Mn₃O_{4.26}. Thus, manganese tetroxide, which has an inherent tendency to adsorb oxygen, will also, when subjected to a rise in temperature, undergo a structural change (at about 575°C) that is accompanied by the adsorption of oxygen. In such a case, the adsorption of oxygen in the vicinity of the manganese tetroxide during fading appears to produce beneficial effects against fading in other constituents within the friction material, such as preventing the oxidation of organic substances, thereby checking a decline in the friction coefficient. Moreover, the structural change that occurs in the manganese tetroxide during a rise in temperature (at about 575°C) is accompanied by an increase in its Mohs hardness (from a value of 4 to a value of 5.5 to 7). This characteristic appears to compensate for the drop in abrasiveness normally associated with a rise in temperature, although the present invention is in no way limited by this conjecture.

The manganese tetroxide has an average particle size of preferably 0.1 to 20 µm, and more preferably 0.1 to 10 µm.

The amount of manganese tetroxide included in the friction material is preferably at least 0.3 vol%, more preferably 0.3 to 15 vol%, and even more preferably 0.5 to 10 vol%, of the overall composition. Moreover, the amount of manganese tetroxide is preferably at least 0.5 vol%, more preferably 0.5 to 30 vol%, and even more preferably 0.5 to 20 vol%, of the inorganic filler in the friction material.

The friction materials of the invention are generally produced by uniformly blending specific amounts of the above-described fibrous base, binder and filler in a suitable mixer such as a Loedige mixer or Eirich mixer, and preforming the blend in a mold. The preform is then molded at a temperature of 130 to 180°C and a pressure of 14.7 to 49 MPa for a period of 3 to 10 minutes. The resulting friction material is typically postcured by heat treatment at 150 to 250°C for 2 to 10 hours, then spray-painted, baked and surface-ground as needed to give the finished friction material.

In the case of automotive disc pads and brake linings, production may be carried out by placing the preform on an iron or aluminum plate that has been pre-washed, surface-treated and coated with an adhesive, molding the preform in this state within a mold, and subsequently heat-treating, spray-painting, baking and surface-grinding.

The friction material of the invention can be used in such applications as disc pads, brake shoes and brake linings for automobiles, large trucks, railroad cars and various types of industrial machinery.

### EXAMPLES

Examples of the invention and comparative examples are given below by way of illustration and not by way of limitation. In the following examples, "average particle size" refers to the 50% size obtained using a laser diffraction type particle size distribution measuring technique.

### Examples 1 to 13, Comparative Examples 1 to 6

Friction material compositions formulated as shown in Tables 1 to 3 were uniformly blended in a Loedige mixer and preformed in a mold under a pressure of 30 MPa for a period of 1 minute. The preforms were molded for 7 minutes at a temperature and pressure of 150°C and 40 MPa, then postcured by 5 hours of heat treatment at 220°C, yielding friction materials in the respective examples.

Disc pad wear, rotor abrasion, coefficient of friction and low-frequency noise were evaluated as described below for each of the resulting friction materials. The results are given in Tables 1 to 3.

### (1) Disc Pad Wear, Rotor Abrasion

Testing was carried out in accordance with the general wear tests described in JASO C427. The test conditions are shown below in Table 4. In the tests, the speed at the start of braking was set at 30 to 80 km/h, the braking deceleration was 2 m/s², the brake temperature prior to braking was from 50 to 200°C, and the total number of braking cycles was 1,600. The disc pad wear and rotor abrasion were rated according to the criteria shown below. In the case of rotor abrasion, the ratings were based on the average roughness Rz of measurements taken at ten points on the rotor surface (according to JIS B0601) following test completion.

### [Disk Pad Wear]

Excellent (Exc): less than 0.4 mm
Good: at least 0.4 mm, but less than 0.5 mm
Fair: at least 0.5 mm, but less than 0.6 mm
Poor: 0.6 mm or more

### [Rotor Abrasion]

Excellent (Exc): less than 30 µm
Good: at least 30 µm, but less than 45 µm
Fair: at least 45 µm but less than 60 µm
Poor: 60 µm or more

### (2) Coefficient of Friction

The average coefficient of friction in the second effectiveness test carried out as described in JASO C406 was rated as follows.
Excellent (Exc): larger than 0.42
Good: larger than 0.37, but at most 0.42
Fair: larger than 0.32, but at most 0.37
Poor: 0.32 or less

### (3) Low-Frequency Noise

The incidence of low-frequency noise during braking was rated as follows in a vehicle test carried out in accordance with JASO C402. The test conditions are shown in Table 5. Values shown below indicate the incidence of such noise.
Excellent (Exc): 0%
Good: more than 0%, but at most 15%
Fair: more than 15%, but at most 30%
Poor: more than 30%

**Table 1**

| Ingredients (volume %) | Example | | | | | | |
|---|---|---|---|---|---|---|---|
| | 1 | 2 | 3 | 4 | 5 | 6 | 7 |
| Stainless steel fibers | 5.0 | 5.0 | 5.0 | 5.0 | 5.0 | 5.0 | 5.0 |
| Bronze fibers | 9.0 | 9.0 | 9.0 | 9.0 | 9.0 | 9.0 | 9.0 |
| Tin powder | 3.0 | 3.0 | 3.0 | 3.0 | 3.0 | 3.0 | 3.0 |
| Tin sulfide powder | 1.5 | 1.5 | 1.5 | 1.5 | 1.5 | 1.5 | 1.5 |
| Aramid fibers | 3.0 | 3.0 | 3.0 | 3.0 | 3.0 | 3.0 | 3.0 |
| Slaked lime | 3.0 | 3.0 | 3.0 | 3.0 | 3.0 | 3.0 | 3.0 |
| Barium sulfate | 9.0 | 9.0 | 4.0 | 9.0 | 9.0 | 9.0 | 14.0 |
| Vermiculite | 10.0 | 10.0 | 10.0 | 10.0 | 10.0 | 10.0 | 10.0 |
| Graphite | 9.0 | 9.0 | 9.0 | 9.0 | 9.0 | 9.0 | 9.0 |
| Molybdenum disulfide | 1.5 | 1.5 | 1.5 | 1.5 | 1.5 | 1.5 | 1.5 |
| Iron sulfide | 5.0 | 5.0 | 5.0 | 5.0 | 5.0 | 5.0 | 0.0 |
| Zinc sulfide | 0.0 | 0.0 | 0.0 | 0.0 | 0.0 | 0.0 | 0.0 |
| Zinc oxide | 5.0 | 5.0 | 5.0 | 5.0 | 0.0 | 3.0 | 0.0 |
| Magnesium oxide | 5.0 | 5.0 | 5.0 | 0.0 | 5.0 | 3.0 | 5.0 |
| Ferrosoferric oxide | 5.0 | 0.0 | 5.0 | 5.0 | 5.0 | 3.0 | 5.0 |
| Manganese tetroxide | 0.0 | 5.0 | 5.0 | 5.0 | 5.0 | 3.0 | 5.0 |
| Zirconium silicate | 0.0 | 0.0 | 0.0 | 0.0 | 0.0 | 0.0 | 0.0 |
| Phenolic resin | 15.0 | 15.0 | 15.0 | 15.0 | 15.0 | 15.0 | 15.0 |
| Cashew dust | 7.0 | 7.0 | 7.0 | 7.0 | 7.0 | 10.0 | 7.0 |
| Rubber | 3.0 | 3.0 | 3.0 | 3.0 | 3.0 | 3.0 | 3.0 |
| Alumina powder | 1.0 | 1.0 | 1.0 | 1.0 | 1.0 | 1.0 | 1.0 |
| Total | 100.0 | 100.0 | 100.0 | 100.0 | 100.0 | 100.0 | 100.0 |
| Disc pad wear | Good | Exc | Exc | Exc | Good | Fair | Fair |
| Rotor abrasion | Exc | Good | Exc | Exc | Good | Good | Fair |
| Coefficient of friction | Good | Exc | Exc | Good | Exc | Fair | Exc |
| Low-frequency noise | Exc | Good | Exc | Good | Exc | Fair | Exc |

**Table 2**

| Ingredients (volume %) | Example | | | | | |
|---|---|---|---|---|---|---|
| | 8 | 9 | 10 | 11 | 12 | 13 |
| Stainless steel fibers | 5.0 | 5.0 | 5.0 | 5.0 | 5.0 | 5.0 |
| Bronze fibers | 9.0 | 9.0 | 9.0 | 9.0 | 9.0 | 9.0 |
| Tin powder | 3.0 | 3.0 | 3.0 | 3.0 | 3.0 | 3.0 |
| Tin sulfide powder | 4.5 | 1.5 | 1.5 | 1.5 | 1.5 | 1.5 |
| Aramid fibers | 3.0 | 3.0 | 3.0 | 3.0 | 3.0 | 3.0 |
| Slaked lime | 3.0 | 3.0 | 3.0 | 3.0 | 3.0 | 3.0 |
| Barium sulfate | 11.0 | 14.0 | 4.0 | 9.0 | 9.0 | 9.0 |
| Vermiculite | 10.0 | 10.0 | 10.0 | 10.0 | 10.0 | 10.0 |
| Graphite | 9.0 | 9.0 | 9.0 | 9.0 | 9.0 | 9.0 |
| Molybdenum disulfide | 1.5 | 1.5 | 1.5 | 1.5 | 1.5 | 1.5 |
| Iron sulfide | 0.0 | 0.0 | 3.0 | 5.0 | 0.0 | 2.0 |
| Zinc sulfide | 0.0 | 0.0 | 2.0 | 0.0 | 5.0 | 3.0 |
| Zinc oxide | 0.0 | 5.0 | 5.0 | 5.0 | 5.0 | 0.0 |
| Magnesium oxide | 5.0 | 5.0 | 5.0 | 0.0 | 5.0 | 5.0 |
| Ferrosoferric oxide | 5.0 | 5.0 | 5.0 | 5.0 | 0.0 | 5.0 |
| Manganese tetroxide | 5.0 | 0.0 | 5.0 | 5.0 | 5.0 | 5.0 |
| Zirconium silicate | 0.0 | 0.0 | 0.0 | 0.0 | 0.0 | 0.0 |
| Phenolic resin | 15.0 | 15.0 | 15.0 | 15.0 | 15.0 | 15.0 |
| Cashew dust | 7.0 | 7.0 | 7.0 | 7.0 | 7.0 | 7.0 |
| Rubber | 3.0 | 3.0 | 3.0 | 3.0 | 3.0 | 3.0 |
| Alumina powder | 1.0 | 1.0 | 1.0 | 1.0 | 1.0 | 1.0 |
| Total | 100.0 | 100.0 | 100.0 | 100.0 | 100.0 | 100.0 |
| Disc pad wear | Good | Good | Exc | Exc | Exc | Exc |
| Rotor abrasion | Fair | Exc | Exc | Exc | Good | Good |
| Coefficient of friction | Fair | Fair | Exc | Exc | Exc | Exc |
| Low-frequency noise | Exc | Exc | Exc | Good | Exc | Exc |

**Table 3**

| Ingredients (volume %) | Comparative Example | | | | | |
|---|---|---|---|---|---|---|
| | 1 | 2 | 3 | 4 | 5 | 6 |
| Stainless steel fibers | 5.0 | 5.0 | 5.0 | 5.0 | 5.0 | 5.0 |
| Bronze fibers | 9.0 | 9.0 | 9.0 | 9.0 | 9.0 | 9.0 |
| Tin powder | 3.0 | 3.0 | 3.0 | 3.0 | 3.0 | 3.0 |
| Tin sulfide powder | 1.5 | 1.5 | 1.5 | 1.5 | 1.5 | 1.5 |
| Aramid fibers | 3.0 | 3.0 | 3.0 | 3.0 | 3.0 | 3.0 |
| Slaked lime | 3.0 | 3.0 | 3.0 | 3.0 | 3.0 | 3.0 |
| Barium sulfate | 9.0 | 9.0 | 9.0 | 9.0 | 9.0 | 9.0 |
| Vermiculite | 10.0 | 15.0 | 10.0 | 10.0 | 10.0 | 10.0 |
| Graphite | 9.0 | 9.0 | 9.0 | 9.0 | 9.0 | 9.0 |
| Molybdenum disulfide | 1.5 | 1.5 | 1.5 | 1.5 | 1.5 | 1.5 |
| Iron sulfide | 5.0 | 5.0 | 5.0 | 5.0 | 5.0 | 5.0 |
| Zinc sulfide | 0.0 | 0.0 | 0.0 | 0.0 | 0.0 | 0.0 |
| Zinc oxide | 5.0 | 5.0 | 5.0 | 7.5 | 7.5 | 0.0 |
| Magnesium oxide | 5.0 | 5.0 | 5.0 | 7.5 | 0.0 | 7.5 |
| Ferrosoferric oxide | 0.0 | 0.0 | 0.0 | 0.0 | 7.5 | 7.5 |
| Manganese tetroxide | 0.0 | 0.0 | 0.0 | 0.0 | 0.0 | 0.0 |
| Zirconium silicate | 0.0 | 0.0 | 5.0 | 0.0 | 0.0 | 0.0 |
| Phenolic resin | 15.0 | 15.0 | 15.0 | 15.0 | 15.0 | 15.0 |
| Cashew dust | 12.0 | 7.0 | 7.0 | 7.0 | 7.0 | 7.0 |
| Rubber | 3.0 | 3.0 | 3.0 | 3.0 | 3.0 | 3.0 |
| Alumina powder | 1.0 | 1.0 | 1.0 | 1.0 | 1.0 | 1.0 |
| Total | 100.0 | 100.0 | 100.0 | 100.0 | 100.0 | 100.0 |
| Disc pad wear | Good | Poor | Poor | Fair | Fair | Fair |
| Rotor abrasion | Good (adhesion) | Poor | Fair | Fair | Good | Fair |
| Coefficient of friction | Good | Good | Good | Fair | Poor | Poor |
| Low-frequency noise | Poor | Good | Good | Fair | Fair | Good |

| | | | | | | |
|---|---|---|---|---|---|---|
| Stainless steel fibers: length, 1 mm; diameter, 50 µm Tin sulfide powder: Stannolube (produced by CHEMETALL S.A.) Molybdenum disulfide: Average particle size, 2 µm Iron sulfide: Average particle size, 8 µm Zinc sulfide: Average particle size, 0.3 µm Zinc oxide: Average particle size, 2 µm; Mohs hardness, 4 Magnesium oxide: Average particle size, 95 µm; Mohs hardness, 6.5 Ferrosoferric oxide: Average particle size, 0.6 µm; Mohs hardness, 6 Manganese tetroxide: Average particle size, 1 µm; Mohs hardness, 4 Alumina powder: Average particle size, 4 µm | | | | | | |

**Table 4**

| [Disc Pad Wear and Rotor Abrasion Test Conditions] | | | | | |
|---|---|---|---|---|---|
| No | Test* | Speed at start of braking (km/h) | Braking deceleration (m/s²) | Brake temperature before braking (°C) | Number of braking cycles |
| 1 | Breaking in | 50 | 2.9 | 100 | 200 |
| 2 | Wear test 1 | 30 | 2 | 50 | 100 cycles each Total of 7×100 = 700 cycles |
| | | | | 100 | |
| | | | | 150 | |
| | | | | 200 | |
| | | | | 150 | |
| | | | | 100 | |
| | | | | 50 | |
| 3 | Wear test 2 | 50 | 2 | 50 | 100 cycles each Total of 5×100 = 500 cycles |
| | | | | 100 | |
| | | | | 200 | |
| | | | | 100 | |
| | | | | 50 | |
| 4 | Wear test 3 | 80 | 2 | 100 | 100 cycles each Total of 2×100 = 200 cycles |
| | | | | 200 | |

| | | | | | |
|---|---|---|---|---|---|
| *In accordance with wear tests described in JASO C427-88. | | | | | |

**Table 5**

| [Low-Frequency Noise Test Conditions] | | | | | |
|---|---|---|---|---|---|
| No. | Test* | Speed at start of braking (km/h) | Braking deceleration (m/s²) | Brake temperature before braking (°C) | Number of braking cycles |
| 1 | Breaking in | 65 | 3.5 | 120 max. | 100 |
| 2 | Noise test | 35 max. | | 50 | 2 cycles each Total of 4×7×2 = 56 cycles |
| | | | | 100 | |
| | | | 1 | 150 | |
| | | | 3 | 200 | |
| | | | 4 | 150 | |
| | | | | 100 | |
| | | | | 50 | |
| *In accordance with vehicle test described in JASO C402. | | | | | |

## Claims

1. A friction material made by molding and curing a composition comprising 3 to 8 vol% of stainless steel fibers having a fiber length of 0.5 to 1.5 mm and a fiber diameter of 25 to 75 µm, a binder and a filler, which friction material includes at least three types of metal oxide having Mohs hardnesses of 4 to 6.5 in a combined amount of at least 12 vol%.

2. The friction material of claim 1, wherein the at least three types of metal oxide having Mohs hardnesses of 4 to 6.5 are selected from among zinc oxide, magnesium oxide, ferrosoferric oxide (triiron tetroxide), manganese tetroxide (trimanganese tetroxide), tin oxide, and titanium oxide.

3. The friction material of claim 1 or 2 which includes 1 to 15 vol% of an organic substance as the filler.

4. The friction material of any one of claims 1 to 3 which includes 5 to 10 vol% of at least two metal sulfides selected from among molybdenum disulfide, iron sulfide and zinc sulfide.

5. The friction material of any one of claims 1 to 4 which includes 0.5 to 2 vol% of alumina powder.

## Patentansprüche

1. Reibmaterial, das durch das Formen und Härten einer Zusammensetzung hergestellt wird, die 3 bis 8 Vol.-% Edelstahlfasern mit einer Faserlänge von 0,5 bis 1,5 mm und einem Faserdurchmesser von 25 bis 75 µm, ein Bindemittel und einen Füllstoff umfasst, wobei das Reibmaterial zumindest drei Metalloxidtypen mit einer Mohsschen Härte von 4 bis 6,5 in einer Gesamtmenge von zumindest 12 Vol.-% umfasst.

2. Reibmaterial nach Anspruch 1, worin die zumindest drei Metalloxidtypen mit einer Mohsschen Härte von 4 bis 6,5 aus Zinkoxid, Magnesiumoxid, Eisen(II,III)-oxid (Dreieisentetraoxid), Mangantetraoxid (Trimangantetraoxid), Zinnoxid und Titanoxid ausgewählt sind.

3. Reibmaterial nach Anspruch 1 oder 2, das 1 bis 15 Vol.-% einer organischen Substanz als Füllstoff umfasst.

4. Reibmaterial nach einem der Ansprüche 1 bis 3, das 5 bis 10 Vol.-% von zumindest zwei Metallsulfiden umfasst, die aus Molybdändisulfid, Eisensulfid und Zinksulfid ausgewählt sind.

5. Reibmaterial nach einem der Ansprüche 1 bis 4, das 0,5 bis 2 Vol.-% Aluminiumoxidpulver umfasst.

## Revendications

1. Matériau de friction réalisé par moulage et durcissement d'une composition comprenant 3 à 8% en vol de fibres d'acier inoxydable d'une longueur de fibre de 0,5 à 1,5 mm et d'un diamètre de fibre de 25 à 75 µm, un liant et une charge, ledit matériau de friction comporte au moins trois types d'oxydes métalliques d'une dureté de Mohs de 4 à 6,5 en une quantité combinée d'au moins 12% en vol.

2. Matériau de friction selon la revendication 1, dans lequel les au moins trois types d'oxydes métalliques ayant une dureté de Mohs de 4 à 6,5 sont sélectionnés parmi l'oxyde de zinc, l'oxyde de magnésium, l'oxyde ferrosoferrique (tétroxide de trifer), tétroxyde de manganèse (tétroxyde de trimanganèse), oxyde d'étain et oxyde de titane.

3. Matériau de friction selon la revendication 1 ou 2, qui comporte 1 à 15% en vol d'une substance organique comme charge.

4. Matériau de friction selon l'une quelconque des revendications 1 à 3, qui comporte 5 à 10% en vol. d'au moins deux sulfures métalliques sélectionnés parmi le disulfure de molybdène, le sulfure de fer et le sulfure de zinc.

5. Matériau de friction selon l'une quelconque des revendications 1 à 4, qui comporte 0,5 à 2% vol. de poudre d'alumine.
